# EUROPEAN PATENT APPLICATION

(11) **EP 4 501 278 A1**
(43) Date of publication of application: **05.02.2025**
(21) Application number: 23779027.4
(22) Date of filing: 20.02.2023
(51) Int. Cl.: A61C 13/097

(54) **SET OF ARTIFICIAL TEETH**

(30) Priority: 30.03.2022 JP 2022055820
(71) Applicant: GC Corporation, Sunto-gun, Shizuoka 410-1307 (JP)
(72) Inventor: KINOSHITA, Kazuhiro, Kasugai-shi, Aichi 486-0844 (JP); NAGATOMI, Yusuke, Kasugai-shi, Aichi 486-0844 (JP)
(74) Representative: Müller-Boré & Partner Patentanwälte PartG mbB
(86) International application number: PCT/JP2023/005984
(87) International publication number: WO 2023/188997

(57) **Abstract**

In a group of artificial teeth which includes plural artificial teeth, a lingual cusp, a buccal cusp, and a pit between the lingual cusp and the buccal cusp are formed on an occlusal surface of each of artificial teeth belonging to posterior teeth parts among the plural artificial teeth; occlusal facets are provided on a slope between the lingual cusp and the pit, and on a slope between the buccal cusp and the pit, respectively; in a centric occlusal position of upper and lower jaws, the buccal cusp of the lower jaw is arranged in the pit of the upper jaw, so that the occlusal facets come into contact with each other; in a lateral occlusal position of the upper and lower jaws, on a working side, the buccal cusps of the upper and lower jaws come into contact with each other, and the lingual cusps of the upper and lower jaws come into contact with each other, to form a space between the pits of the upper and lower jaws; and an angle between buccal and lingual internal cusp slopes is different between premolars and molars.

## Description

### [Technical Field]

The present disclosure relates to a group of artificial teeth which includes plural artificial teeth and is for making up dentures.

### [Background Art]

A balanced occlusion is a desired form of the occlusion of a group of artificial teeth which comprises plural artificial teeth and make up dentures. The balanced occlusion is such that the occlusal balance of at least part of occlusion is kept by occlusal facets being in contact with and sliding on each other in the processes at a maximal intercuspal position (centric occlusal position) and an eccentric occlusal position. A further desired form of the balanced occlusion is such that concerning all the artificial teeth, the occlusal facets are in contact with and slide on each other in the processes at a maximal intercuspal position and an eccentric occlusal position, which is called a full-balanced occlusion.

This balanced occlusion or full-balanced occlusion corresponds to a condition where the attrition of natural teeth has progressed, and is considered to be a desired form of the occlusion of artificial teeth because a group of artificial teeth which has artificial teeth in surface-to-surface contact that corresponds to this condition improves the efficiency of mastication to enable flavors to be tasted more. Therefore, this form of occlusion is popular, and is often applied to dentures and the like for the elderly.

In contrast, it takes a lot of effort to achieve a balanced occlusion because occlusal facets have to be ground to be adjusted according to a patient, which is problematic.

For this, for example, patent literatures 1 and 2 each disclose an artificial tooth including occlusal facets that have predetermined forms in advance. According to this, the workloads for grinding to adjust the tooth can be decreased.

### [Citation List]

### [Patent Literature]

[Patent Literature 1] JP 4546572 B1
[Patent Literature 2] WO 2009/044443 A1

### [Summary of Invention]

### [Technical Problem]

However, just the formation of occlusal facets as conventional in order that the form of the occlusion is a balanced or full-balanced occlusion does not always lead to an appropriate masticatory movement, which is problematic.

An object of the present disclosure is to provide a group of artificial teeth which can lead to a more appropriate masticatory movement.

### [Solution to Problem]

The present application discloses a group of artificial teeth which comprises plural artificial teeth, wherein a lingual cusp, a buccal cusp, and a pit between the lingual cusp and the buccal cusp are formed on an occlusal surface of each of artificial teeth belonging to posterior teeth parts among the plural artificial teeth; occlusal facets are provided on a slope between the lingual cusp and the pit, and on a slope between the buccal cusp and the pit, respectively; in a centric occlusal position of upper and lower jaws, the buccal cusp of the lower jaw is arranged in the pit of the upper jaw, so that the occlusal facets come into contact with each other; in a lateral occlusal position of the upper and lower jaws, on a working side, the buccal cusps of the upper and lower jaws come into contact with each other, and the lingual cusps of the upper and lower jaws come into contact with each other, to form a space between the pits of the upper and lower jaws; and an angle between buccal and lingual internal cusp slopes is different between premolars and molars.

### [Advantageous Effects of Invention]

According to the present disclosure, a group of artificial teeth which comprises plural artificial teeth and can lead to a more appropriate masticatory movement can be provided.

### [Brief Description of Drawings]

[Fig. 1] Fig. 1 is a front view of dentures 1 including a group of artificial teeth 10.
[Fig. 2] Fig. 2 shows an upper jaw A and a lower jaw B on the occlusal surfaces side.
[Fig. 3] Fig. 3 shows a part (posterior teeth) of the group of artificial teeth 10 on the buccal side.
[Fig. 4] Fig. 4 illustrates an artificial tooth 11.
[Fig. 5] Fig. 5 illustrates an occlusal surface of the artificial tooth 11.
[Fig. 6] Fig. 6 illustrates occlusal contacts of occlusal facets in a lateral movement.
[Fig. 7] Fig. 7 illustrates a centric occlusal position (Fig. 7(a)) and a lateral occlusal position (Fig. 7(b)).

### [Description of Embodiments]

### [Group of Artificial Teeth]

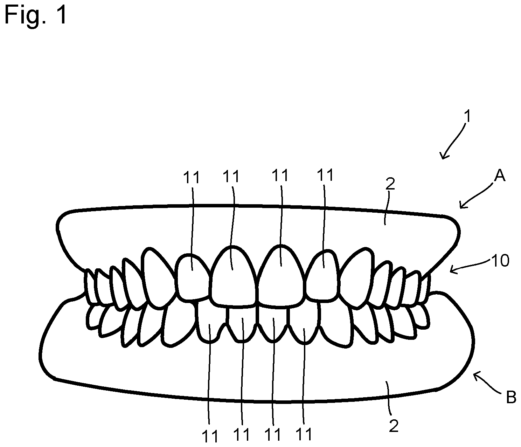

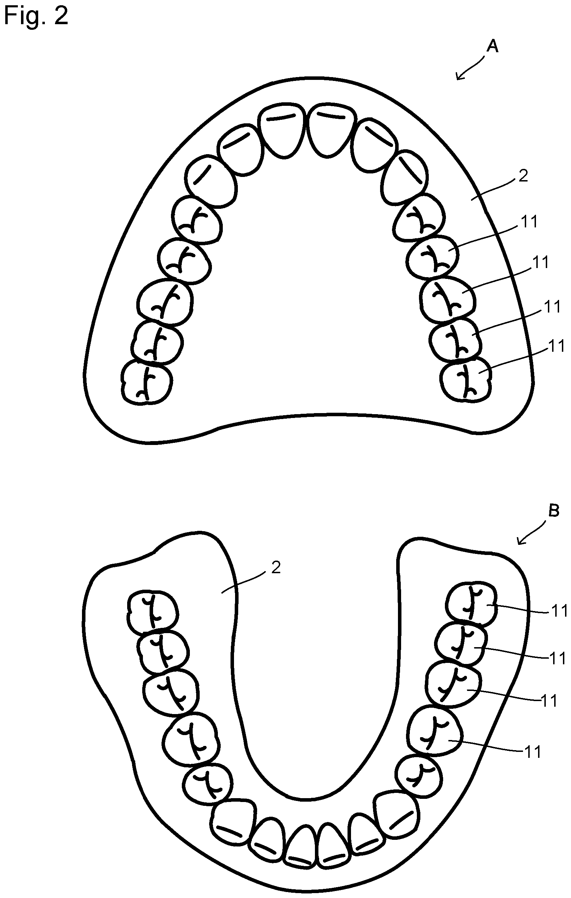

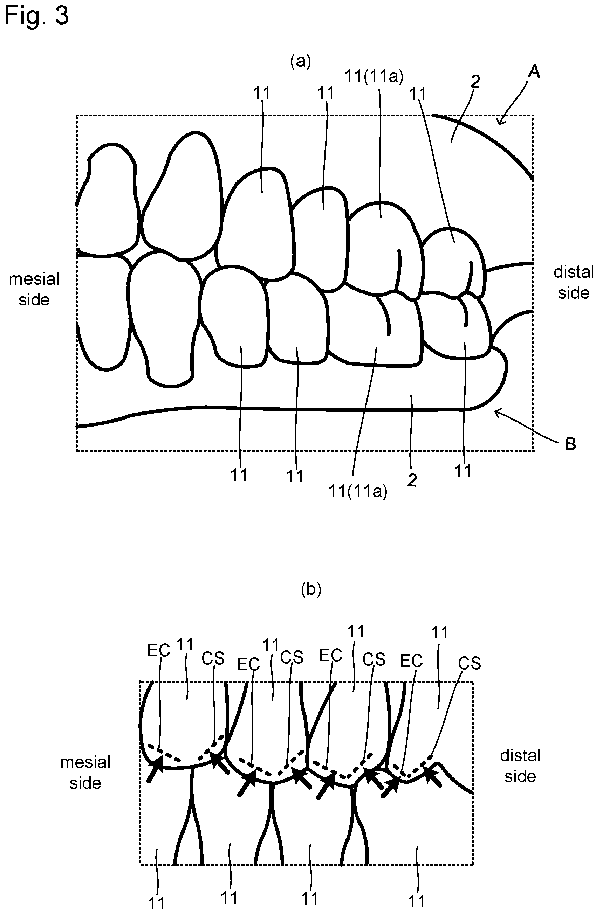

Fig. 1 is a front view of dentures 1 including a group of artificial teeth 10 according to one embodiment. Fig. 2 shows the dentures 1 on the occlusal surface side with the dentures 1 separated into an upper jaw A (upper side in Fig. 2) and a lower jaw B (lower side in Fig. 2). Fig. 3 is focused on posterior teeth parts.

As can be seen from these drawings, the group of artificial teeth 10 of the present disclosure comprises plural artificial teeth 11. In this embodiment, as the artificial teeth 11, artificial teeth corresponding to an anterior teeth part (a central incisor, a lateral incisor and a canine) and a posterior teeth part (a first premolar, a second premolar, a first molar and a second molar) are included on each right and left side on each of the upper jaw A and the lower jaw B. The present disclosure is not limited to this as long as a part of them is included.

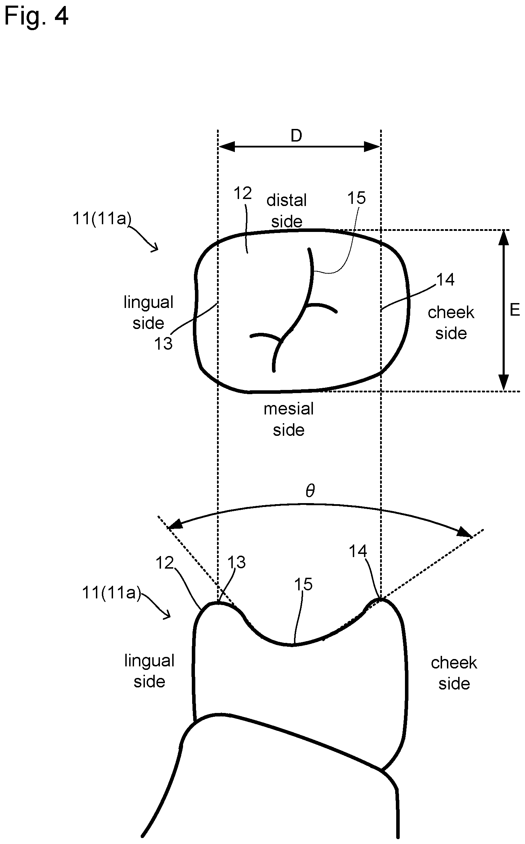

The artificial teeth 11 are formed from a ceramic, a synthetic resin, or a composite material thereof, and are fixed to denture bases 2 that are made from a resin and modeled on gingival parts. Fig. 4 shows one of the artificial teeth 11 (a posterior tooth or first molar 11a) on the occlusal surface 12 side (top), and the mesial side (bottom). This artificial teeth 11 each have a rugged occlusal surface 12. On this occlusal surface 12 on each posterior tooth, a convex lingual cusp 13, a convex buccal cusp 14, and a pit 15 that is the valley between the lingual cusp 13 and the buccal cusp 14 are formed. These lingual cusp 13, buccal cusp 14, and pit 15 are each not uniform in shape, but extend in the mesial and distal direction.

The artificial teeth 11 included in the group of artificial teeth 10 of the present disclosure have the following structure.

### <Aspect of Occlusal Surface (1)>

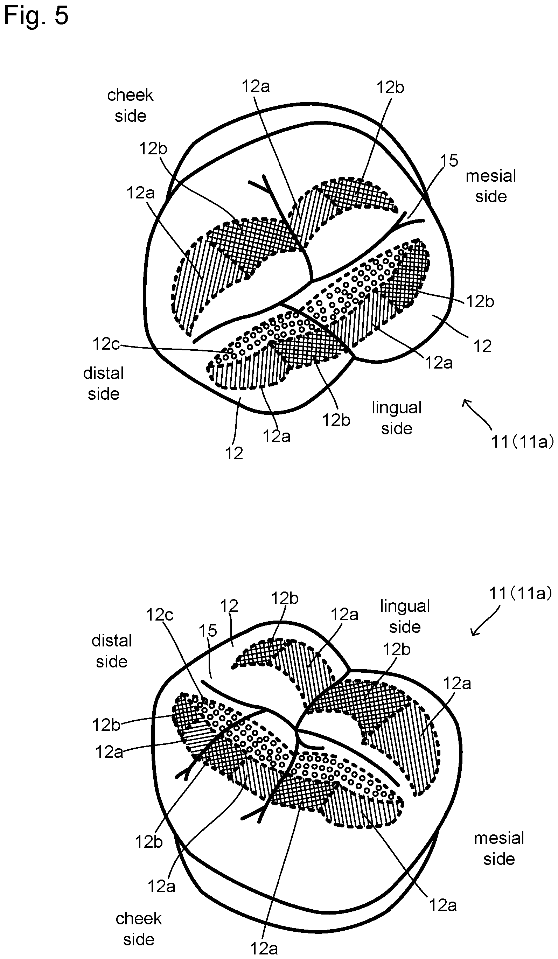

The first molar 11a among the artificial teeth 11 that are included in this embodiment includes occlusal facets (12a, 12b, 12c) that are small flat faces on the occlusal surface 12. Fig. 5 shows a pair of the first molars 11a of the upper and lower jaws as an example so that the occlusal facets (12a, 12b, 12c) can be seen. The occlusal facets (12a, 12b, 12c) are formed on the occlusal surface 12, and are the parts of the flat faces which are provided so as to each have a predetermined angle with the occlusal plane. The occlusal facets include the protrusive facets 12a, the retrusive facets 12b, and the balancing occlusal facet 12c. The occlusal plane is as known, and is a hypothetical plane including the incisal point and the cusp tips of the right and left terminal molars at the dentition of the upper or lower jaw.

The occlusal surface 12 of each of the artificial teeth 11 in the posterior teeth parts in the group of artificial teeth 10 preferably includes all types of the occlusal facets; or the protrusive facets 12a and the retrusive facets 12b. The artificial teeth 11 in the anterior teeth parts are each provided with, on the occlusal surface 12, the protrusive facet 12a and the retrusive facet 12b; or the protrusive facet 12a.

The occlusal facets (12a, 12b, 12c) are arranged on proper places on the occlusal surface 12, and are arranged at least on the slope between the lingual cusp 13 and the pit 15, and the slope between the buccal cusp 14 and the pit 15.

The dentures 1 worn by a patient produce a protrusive movement and a lateral movement: in the protrusive movement, the protrusive facets 12a of the upper jaw come into contact with and glide on those of the lower jaw in the group of artificial teeth 10; and in the lateral movement, the protrusive facets 12a and the retrusive facets 12b of the upper jaw come into contact with and glide on the protrusive facets 12a and the retrusive facets 12b of the lower jaw, respectively. The balancing occlusal facet 12c is formed on the inner bevel between the lingual cusp 13 and the pit 15 in the upper jaw A; and formed between the buccal cusp 14 and the pit 15 in the lower jaw B.

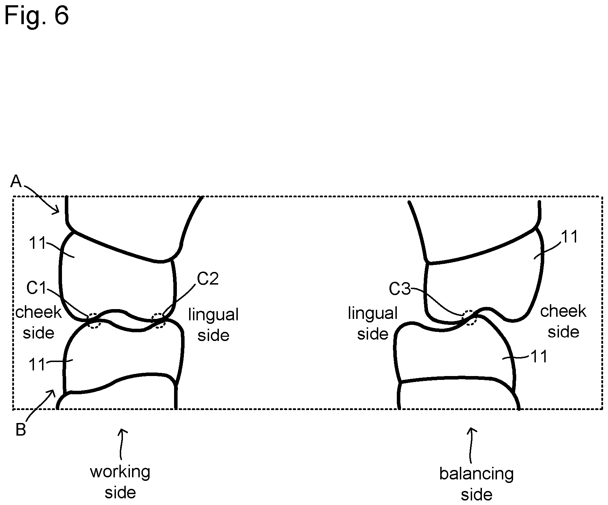

As the aspect of the occlusion in the lateral movement as schematically shown in Fig. 6, preferably, in the lateral movement, the inner bevel of the buccal cusp of the upper jaw comes into contact with the outer bevel of the buccal cusp of the lower jaw on the working side (contact C1 in Fig. 6); the lingual cusp of the upper jaw comes into contact with the inner bevel of the lingual cusp of the lower jaw on the working side (contact C2 in Fig. 6); and the inner bevel of the lingual cusp of the upper jaw comes into contact with the inner bevel of the buccal cusp of the lower jaw on the balancing side (contact C3 in Fig. 6) at the same time on the occlusal facets (12a, 12b, 12c).

Other than the foregoing, specific aspects of the arrangement, the shape, the inclination, and the size of each occlusal facet (12a, 12b, 12c) are as known. Each occlusal facet (12a, 12b, 12c) can be formed appropriately in view of mastication, occlusion, etc.

Because the occlusal facets are formed on the occlusal surface in advance as described, no selective griding is necessary, or just a little griding is necessary even if the grinding is performed, which can result in smooth production of artificial teeth. In addition, the formation of the appropriate occlusal facets in advance allows artificial dentition to be formed, so that the surface-to-surface contacts between the occlusal facets in the occlusion are on correct places, which brings the dentures with which chewing becomes easy.

### <Aspect of Occlusal Surface (2)>

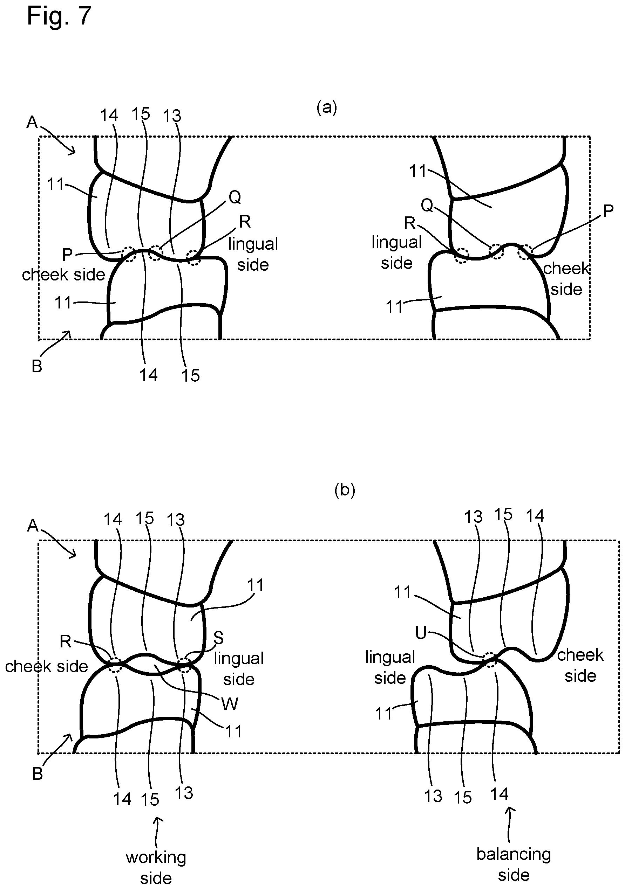

In relation to the occlusal facets (12a, 12b, 12c), the occlusal surfaces 12 of artificial teeth 11 of the upper and lower jaws which are in an occlusal relationship in the centric occlusal position as shown in Fig. 7(a) are formed to have at least three contact parts (P, Q, R); here, the artificial teeth 11 are the ones belonging to the posterior teeth parts. That is, in the centric occlusal position, the buccal cusp 14 of each of the artificial teeth 11 of the lower jaw B enters the pit 15 of each of the artificial teeth 11 of the upper jaw A, and is in contact with the slope between the pit 15 and the lingual cusp 13 of each of the artificial teeth 11 of the upper jaw A, and the slope between the pit 15 and the buccal cusp 14 of each of the artificial teeth 11 of the upper jaw A (contact parts P, Q). Further, the lingual cusp 13 of each of the artificial teeth 11 of the upper jaw A enters the pit 15 of each of the artificial teeth 11 of the lower jaw B to form the contact part R.

These contacts are contacts between the occlusal facets.

In contrast, in relation to the occlusal facets (12a, 12b, 12c), the occlusal surfaces 12 of artificial teeth 11 of the upper and lower jaws are in contact with each other on the working side on at least two planes (contact parts R, S) in a lateral occlusal position in the eccentric occlusal position as shown in Fig. 7(b) to form a space W therebetween; here, the artificial teeth 11 are the ones belonging to the posterior teeth parts. More specifically, on the working side, the space W is formed between the pit 15 of each of the artificial teeth 11 of the upper jaw and that of each of the artificial teeth 11 of the lower jaw by the contact between the buccal cusp 14 of each of the artificial teeth 11 of the upper jaw and that of each of the artificial teeth 11 of the lower jaw (contact part R), and the contact between the lingual cusp 13 of each of the artificial teeth 11 of the upper jaw and that of each of the artificial teeth 11 of the lower jaw (contact part S).

On the balancing side (nonworking side), the occlusal surfaces 12 of the artificial teeth 11 of the upper and lower jaws are in contact with each other on one plane (contact part U). Specifically, the slope from the pit 15 to the buccal cusp 14 of each of the artificial teeth 11 of the lower jaw B is in contact with the slope from the pit 15 to the lingual cusp 13 of each of the artificial teeth 11 of the upper jaw A to form the contact part U.

These contacts are also contacts between the occlusal facets.

The foregoing construction of the aspect of the contacts between the artificial teeth of the upper and lower jaws for movements in addition to that including the arrangement of the occlusal facets allows chews in the spaces W to be efficiently masticated on the working side, and brings entirely well-balanced dentures, which allows a stable occlusal condition to be maintained.

### <Buccolingual Diameter>

As shown in Fig. 4, among the artificial teeth 11 included in the group of artificial teeth 10 of this embodiment, the buccolingual diameter D of the occlusal surface proper to the first molars 11a is formed to be larger. The buccolingual diameter D/mesiodistal distance E of the proper occlusal surface is preferably no less than 0.69.

Here, the buccolingual diameter of the proper occlusal surface is the distance D in Fig. 4, and is the distance between the lingual cusp 13 and the buccal cusp 14.

The foregoing construction of the buccolingual diameter can elongate the chewing cycle, and enables cases requiring gliding to be appropriately handled. Gliding enables food to be ground more. As a result, the aromas and deep flavors in the food can be tasted.

### <Angle between Buccal and Lingual Internal Cusp Slopes>

The group of artificial teeth 10 of this embodiment is formed in such a way that angles each between buccal and lingual internal cusp slopes in the posterior teeth parts are gradually developed when the group of artificial teeth 10 is formed to be an artificial dentition as dentures. As shown by θ in Fig. 4, each angle between buccal and lingual internal cusp slopes is the angle formed by the slope from the pit 15 to the buccal cusp 14, and the slope from the pit 15 to the lingual cusp 13.

That is, in this embodiment, the angle between buccal and lingual internal cusp slopes is different between the premolars and the molars. The ascending order of the angle between buccal and lingual internal cusp slopes is preferably the first premolars, the second premolars, the first molars, and the second molars.

According to this, unnecessary contacts between artificial teeth in the movements of the upper and lower jaws can be reduced to prevent the artificial teeth from getting off, and pains from being caused.

### <Protrusive Facets, Retrusive Facets>

The group of artificial teeth 10 of this embodiment is preferably provided with protrusive facets and retrusive facets when formed to be an artificial dentition as dentures.

The protrusive facets are the faces where the force of closing the mouth is received, and, as schematically shown by the signs CS in Fig. 3(b), are the faces where the force of closing the mouth when the oral cavity is closed is received. The protrusive facets are the occlusal facets provided on the distal side of the upper jaw, and incline toward the mesial side as facing the lower jaw.

The retrusive facets are the faces where the retrusion force is received: the retrusion force is the force by the lower jaw when the lower jaw moves in the retruding direction. As schematically shown by the signs EC in Fig. 3(b), the retrusive facets are the faces where the retrusion force is received. The retrusive facets are the occlusal facets provided on the mesial side of the upper jaw, and incline toward the distal side as facing the lower jaw.

The group of artificial teeth provided with these protrusive facets and retrusive facets can receive the occlusal force, can bring more certain mastication, and can distribute the occlusal force, which can reduce pains. In addition, such a group of artificial teeth can improve the stability of the occlusion to prevent the dentures from getting off.

### [Denture Base, Prosthesis, etc.]

The aforementioned group of artificial teeth can be provided as a group of artificial teeth. Other than this, the aforementioned group of artificial teeth can be provided as a prosthesis that is obtained by uniting the group of artificial teeth and a gingiva into one body and that has the shape of teeth which reproduces the inside of an oral cavity, and as a partial denture base or a denture base including the aforementioned combination of the upper and lower jaws of the group of artificial teeth. Any of these forms include the group of artificial teeth of the present disclosure.

### [Reference Signe List]

1 dentures
10 group of artificial teeth
11 artificial teeth
11a first molar (artificial tooth)
12 occlusal surface
13 lingual cusp
14 buccal cusp
15 pit

## Claims

1. A group of artificial teeth, the group comprising plural artificial teeth, wherein
a lingual cusp, a buccal cusp, and a pit between the lingual cusp and the buccal cusp are formed on an occlusal surface of each of artificial teeth among the plural artificial teeth, the artificial teeth belonging to posterior teeth parts,
occlusal facets are provided on a slope between the lingual cusp and the pit, and on a slope between the buccal cusp and the pit, respectively,
in a centric occlusal position of upper and lower jaws, the buccal cusp of the lower jaw is arranged in the pit of the upper jaw, so that the occlusal facets come into contact with each other,
in a lateral occlusal position of the upper and lower jaws, on a working side, the buccal cusps of the upper and lower jaws come into contact with each other, and the lingual cusps of the upper and lower jaws come into contact with each other, to form a space between the pits of the upper and lower jaws, and
an angle between buccal and lingual internal cusp slopes is different between premolars and molars.
